Europäisches Patentamt

European Patent Office

Office européen des brevets

(19)

(11) Veröffentlichungsnummer: **0 108 209**
**A2**

(12) # EUROPÄISCHE PATENTANMELDUNG

(21) Anmeldenummer: **83108450.4**

(22) Anmeldetag: **27.08.83**

(51) Int. Cl.³: **F 16 H 5/78**
**//G05G19/00**

(30) Priorität: **09.10.82 DE 3237508**

(43) Veröffentlichungstag der Anmeldung:
**16.05.84  Patentblatt  84/20**

(84) Benannte Vertragsstaaten:
**AT CH DE FR GB IT LI SE**

(71) Anmelder: **WABCO Westinghouse Fahrzeugbremsen GmbH**
**Am Lindener Hafen 21 Postfach 91 12 80**
**D-3000 Hannover 91(DE)**

(72) Erfinder:
**Der Erfinder hat auf seine Nennung verzichtet**

(74) Vertreter: **Schrödter, Manfred**
**WABCO Westinghouse Fahrzeugbremsen GmbH Am Lindener Hafen 21 Postfach 91 12 80**
**D-3000 Hannover 91(DE)**

(54) **Gangschaltung für ein fremdkraftbetätigtes Getriebe.**

(57) Es wird eine Gangschaltung für ein fremdkraftbetätigtes Getriebe (6) mit einem Schalthebel (2), der in Ganganwahlstellungen und in eine Neutralstellung gebracht werden kann, vorgeschlagen. Dabei weist der Schalthebel (2) nur zwei Ganganwahlpositionen (30,31) für Herauf- bzw. Herunterschalten auf. Diesen Ganganwahlpositionen wird durch eine elektronische Auswerteschaltung (4) ein jeweils optimaler Gang zugeordnete. Hierzu erhält die Auswerteschaltung (4) über Leitungen (9, 10, 23, 24) Signale über den jeweiligen Fahrzustand des Fahrzeugs. Die Gangschaltung ist so ausgelegt, daß ein Bewegen des Schalthebels (2) in Fahrtrichtung ein Heraufschalten und entgegen der Fahrtrichtung ein Herunterschalten bewirkt. Bei der Fahrzeuggeschwindigkeit bewirkt ein Bewegen des Schalthebels (2) entgegen der Fahrtrichtung das Einschalten des Rückwärtsganges. Hierzu Fig.

EP 0 108 209 A2

./...

Hannover, den 05.10.82
WP 27/82   A/Gr

WABCO Westinghouse Fahrzeugbremsen GmbH, Hannover

Gangschaltung für ein fremdkraftbetätigtes Getriebe

Die Erfindung bezieht sich auf eine Gangschaltung für ein fremdkraftbetätigtes Getriebe gemäß dem Oberbegriff des Patentanspruchs 1.

Es sind verschiedene Ausführungen von Gangschaltungen für Schaltgetriebe bekannt. Die gebräuchlichste ist die sogenannte H-Schaltung mit vier Vorwärtsgängen bei Personenkraftwagen und vier bis sechzehn Vorwärtsgängen bei Nutzfahrzeugen. Nachteilig hierbei ist, daß das Auffinden eines bestimmten Ganges schwierig ist. Dies trifft besonders bei Nutzfahrzeugen mit relativ vielen Gängen zu, wenn ein oder mehrere Gänge übersprungen werden sollen.

Es sind weiterhin sogenannte Linearschaltungen bekannt (DE-OS 30 32 403). Bei diesen Gangschaltungen der eingangs genannten Art sind die Gänge geradlinig in einer Ebene angeordnet. Auch hier macht das Auffinden eines bestimmten Ganges bei Getrieben mit vielen Gängen Schwierigkeiten, da die einzelnen Gänge sehr dicht beieinander liegen. Damit wird die Bedienung des Fahrzeugs erschwert, da der Fahrer vom Verkehr abgelenkt wird und auf den Schalthebel sehen muß.

Der Erfindung liegt die Aufgabe zugrunde, eine Gangschaltung der eingangs genannten Art anzugeben, die sich besonders einfach, ohne den Fahrer abzulenken, auch bei sehr vielen Gängen schalten läßt.

Diese Aufgabe wird durch die im Patentanspruch 1 enthaltene Erfindung gelöst. Wesentlich dabei ist, daß nicht mehr jedem Gang eine feste Stellung des Schalthebels zugeordnet ist. Die Unteransprüche enthalten zweckmäßige Weiterbildungen der Erfindung.

Die Erfindung wird im folgenden anhand einer Zeichnung, die ein schematisch dargestelltes Ausführungsbeispiel enthält, näher erläutert.

Ein Verbrennungsmotor 22 ist an ein Getriebe 6 angeflanscht. Einer elektronischen Auswerteschaltung 4 wird durch einen Drehzahlsensor 8 über eine Leitung 10 ein Signal über die Ausgangsdrehzahl des Getriebes zugeführt. Über einen zweiten Sensor 7 wird der jeweils eingelegte Gang abgetastet und über eine Leitung 9 ebenfalls der Auswerteschaltung 4 zugeführt. Über weitere Leitungen 23, 24 werden der Auswerteschaltung 4 Signale über die Beladung des Fahrzeugs und die Gaspedalstellung bzw. den Regelstangenweg an der Einspritzpumpe übermittelt. Über eine Leitung 20 ist ferner ein Fahrprogrammwähler 5 angeschlossen. Mit diesem sind verschiedene Fahrprogramme wie z.B. "zügig" oder "ökonomisch" wählbar. Über einen Gangsensor 21 wird die jeweilige Stellung eines Schalthebels 2 abgetastet und ebenfalls der Auswerteschaltung 4 mitgeteilt.

Aus den eingegebenen Daten berechnet die Auswerteschaltung 4 einen optimalen Gang. Dieser wird bei Betätigung des Schalthebels 2 in Fahrtrichtung auf die Position 30 (Heraufschalten) oder entgegen der Fahrtrichtung auf die Position 31 (Herunterschalten) durch die Auswerteschaltung 4 über eine Leitung 17 dem Getriebe 6 mitgeteilt und dort hilfskraftbetätigt eingelegt. Hauptsächliche Kriterien für die Berechnung des neuen Ganges sind dabei die Getriebeausgangsdrehzahl bzw. Fahrzeuggeschwindigkeit, die Motordrehzahl und Lastkritereien. Die Motordrehzahl wird dabei aus den Informationen der Sensoren 8 und 7 intern berechnet. Die genaue Funktionsweise der Auswerteschaltung 4, die z.B. einen Mikrocomputer enthalten kann, ist nicht Gegenstand der Erfindung und wird daher nicht näher erläutert.

Über eine weitere Ausgangsleitung 37 steuert die Auswerteschaltung 4 eine Ganganzeige 38 an. Auf dieser wird der gerade eingelegte Gang angezeigt.

Eine weitere Ausgangsleitung 11 dient zum Ansteuern einer Sperrvorrichtung 1. Diese besitzt einen magnetisch betätigten Sperrstift 15, der in eine Ausnehmung 13 einer am Schalthebel 2 befestigten Kulissenscheibe 12 eingreift.

Der Schalthebel 2 besitzt eine Mittelstellung 32, diese wird nach einer Schaltbewegung von selbst wieder eingenommen. Hierzu dient eine Feder 39.

Zum Einschalten des Leerlaufs ist der Schalthebel 2 rechtwinklig zur Schaltbewegung aus der Mittelstellung 32 in eine Neutralstellung 35 schaltbar.

Im folgenden wird die Funktionsweise der Gangschaltung beschrieben.

Will der Fahrer einen höheren Gang einschalten, dann betätigt er den Schalthebel 2 in Fahrtrichtung zunächst auf eine Ganganwahlposition 30. Daraufhin berechnet die Auswerteschaltung 4 aus den ihr vorliegenden Daten über den Fahrzustand den günstigsten nächsthöheren Gang, dieses kann z.B. der vierte, aber auch der fünfte Gang sein. Der so berechnete Gang wird über die Leitung 17 dem Getriebe 6 mitgeteilt und dort eingelegt. Sobald die Gangumschaltung vollzogen ist, wird durch die Auswerteschaltung 4 über die Leitung 11 die Sperrvorrichtung 1 gelöst und damit der Schalthebel 2 entriegelt. Dieser läßt sich jetzt bis in die Endposition 33 vorwärtsschieben. Damit erhält der Fahrer, ohne vom Verkehr abgelenkt zu werden, eine Information darüber, daß die Einlegung des Ganges vollzogen ist, und der Motor wieder eingekuppelt werden kann. Der Fahrer kann dann den Ganghebel wieder loslassen. Dieser wird durch die Feder 39 wieder in die Mittelposition 32 gekippt.

Eine entsprechende Schaltweise gilt auch für das Herunterschalten in einen niedrigeren Gang. Hierzu wird der Schalthebel 2 entgegen der Fahrtrichtung zunächst in eine Ganganwahlposition 31 und nach vollzogener Schaltung in eine Endposition 34 gebracht. Die Feder 39 dient nach vollzogener Schalthandlung zum Zentrieren des Schalthebels 2.

Falls beim Herunterschalten die Fahrzeuggeschwindigkeit nahezu Null ist, wird durch die Auswerteschaltung 4 automatisch der Rückwärtsgang eingelegt.

Falls bei stehendem Fahrzeug heraufgeschaltet wird, wird automatisch entweder der erste Gang oder bei geringerer Beladung auch der zweite Gang zum Anfahren eingelegt.

Auf dem Schalthebel 2 ist ein vom Fahrer betätigbarer Schalter (Taster) 16 vorgesehen, durch welchen über eine

0108209

Leitung 50 die optimale Gangauswahl durch die Auswerteschaltung 4 unterdrückt werden kann. Statt dessen wird jeweils nur ein Gang herauf- oder heruntergeschaltet.

In den Ganganwahlpositionen 30, 31 prüft die Auswerteschaltung 4 vor der Ausführung des Schaltbefehles, ob im Schaltfall die maximale Drehzahl des Motors 22 überschritten wird. Falls eine Überschreitung der maximalen Motordrehzahl eintreten würde, würde die Schaltung nicht ausgeführt werden.

Um ein ordnungsgemäßes Arbeiten der Gangzylinder im Getriebe 6 zu gewährleisten, wird weiter durch die Auswerteschaltung 4 nach Ausführung eines Gangwechsels ein erneutes Schalten für mindestens eine Sekunde unterdrückt.

Die oben beschriebene halbautomatische Gangschaltung ermöglicht ein sehr einfaches Schalten, ohne den Fahrer vom Verkehr abzulenken. Sie kann auch von ungeübten Fahrern leicht bedient werden. Gegenüber einer Vollautomatik ergibt sich der Vorteil, daß der Fahrerwille stets berücksichtigt wird.

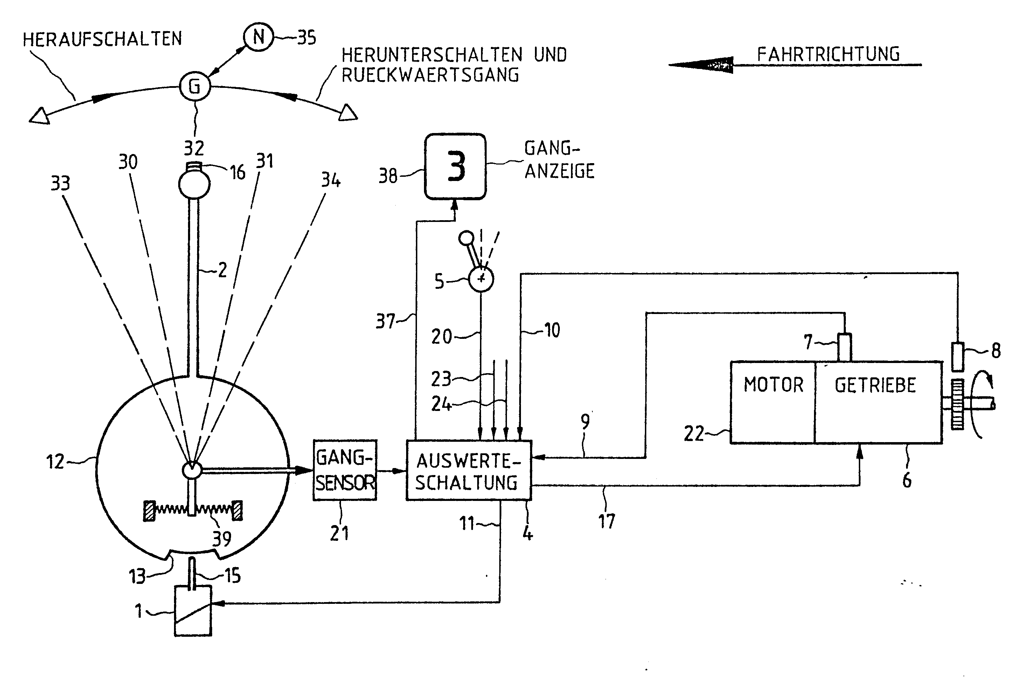

Patentansprüche

1. Gangschaltung für ein fremdkraftbetätigtes Getriebe (6), mit einem Schalthebel (2), der in Ganganwahlstellungen und in eine Neutralstellung gebracht werden kann, und wobei die jeweilige Stellung des Schalthebels (2) durch einen Gangsensor (21) erkannt und einer Auswerteschaltung (4) gemeldet wird, welche das Einlegen eines Ganges bewirkt, gekennzeichnet durch folgende Merkmale:

   a) beim Betätigen gibt der Schalthebel (2) Befehle "Heraufschalten" oder "Herunterschalten" an die Auswerteschaltung (4) ab;

   b) die Auswerteschaltung (4) ordnet aufgrund von Informationen über den Fahrzustand diesen Befehlen einen passenden Gang zu und bewirkt dessen Einlegen.

2. Gangschaltung nach Anspruch 1, gekennzeichnet durch folgende Merkmale:

   a) der Schalthebel (2) weist nur je eine Ganganwahlposition (30, 31) für Herauf- und Herunterschalten auf, der jeweils durch die Auswerteschaltung (4) beliebig viele Vorwärts- oder Rückwärtsgänge zugeordnet werden können;

   b) die Auswerteschaltung (4) erhält über Leitungen (9, 10, 23, 24) Signale über den jeweiligen Fahrzustand;

   c) beim Bewegen des Schalthebels (2) in die Position Herauf- bzw. Herunterschalten (30, 31) wählt die Auswerteschaltung (4) den jeweils günstigsten höheren bzw. niedrigeren Gang aus und bewirkt dessen Einlegen.

3. Gangschaltung nach Anspruch 2, dadurch gekennzeichnet, daß der Schalthebel (2) eine durch eine Feder (39) zentrierte Mittelposition (32) aufweist, und nach einer Schaltung in diese zurückkippt.

4. Gangschaltung nach Anspruch 1 bis 3, dadurch gekennzeichnet, daß der Schalthebel (2) eine rechtwinklig zur Schaltrichtung gelegene Neutralstellung (35) aufweist.

5. Gangschaltung nach Anspruch 1 bis 4, dadurch gekennzeichnet, daß der Vorwärtsbewegung des Schalthebels (2) in Fahrtrichtung ein Heraufschalten, und der Rückwärtsbewegung ein Herunterschalten zugeordnet ist.

6. Gangschaltung nach Anspruch 1 bis 5, dadurch gekennzeichnet, daß bei Bewegung des Schalthebels (2) in Rückwärtsrichtung der Rückwärtsgang eingelegt wird, wenn die Fahrzeuggeschwindigkeit etwa Null ist.

7. Gangschaltung nach Anspruch 1 bis 6, dadurch gekennzeichnet, daß ein fahrerbetätigter Schalter (16) vorgesehen ist, durch den die optimale Gangauswahl durch die Auswerteschaltung (4) unterdrückt und jeweils nur ein Gang herauf oder heruntergeschaltet wird.

8. Gangschaltung nach Anspruch 1 bis 7, dadurch gekennzeichnet, daß die Auswerteschaltung (4) in den Ganganwahlpositionen (30, 31) vor Ausführung eines Schaltbefehles prüft, ob die maximale Drehzahl des Motors (22) nicht überschritten wird, und nur in diesem Fall die Schaltung ausführt.

9. Gangschaltung nach Anspruch 1 bis 8, dadurch gekennzeichnet, daß die Auswerteschaltung (4) nach Ausführung eines Gangwechsels ein erneutes Schalten für mindestens eine Sekunde unterdrückt.

10. Gangschaltung nach Anspruch 1 bis 9, <u>dadurch gekenn-</u> <u>zeichnet</u>, daß eine von der Auswerteschaltung (4) angesteuerte Ganganzeige (38) vorgesehen ist.

0108209

WP 27182